# EUROPÄISCHE PATENTANMELDUNG

(11) **EP 1 640 353 A1**
(43) Veröffentlichungstag der Anmeldung: **29.03.2006**
(21) Anmeldenummer: 04104615.2
(22) Anmeldetag: 23.09.2004
(51) Int. Cl.: C04B 38/10

(54) **Ein mineralischer silikatischer Verbundstoff, ein Formkörper auf Basis dieses Verbundstoffes, und dessen Verwendung, sowie ein Verfahren zur Herstellung**

(71) Anmelder: Amberger Kaolinwerke Eduard Kick GmbH & Co. KG, 92242 Hirschau (DE); Modina BV, 6333 AT Schimmert (NL)
(72) Erfinder: Rehberg, Kay, Georg-Schiffer-Str. 70, 92242 Hirschau (DE); Prick, Raoul, 6333 AT Schimmert (NL)
(74) Vertreter: Sternagel, Fleischer, Godemeyer & Partner

(57) **Zusammenfassung**

Die Erfindung betrifft einen mineralischen Verbundstoff, enthaltend einen festen silikatischen Schaum als Matrix und Blähglasgranulat als trockenen Füllstoff in dieser Matrix, sowie ein Verfahren zur Herstellung eines mineralischen Verbundstoffes enthaltend einen festen silikatischen Schaum als Matrix und Blähglasgranulat als trockenen Füllstoff in dieser Matrix, mit den folgenden Schritten:
a) Mischen eines Blähglasgranulates als aktiven Füllstoff mit einem silikatischem Schaum als Matrix, wobei das Blähglasgranulat vorzugsweise eine Schüttdichte zwischen 10 und 400 kg/m³, bevorzugt zwischen 10 und 300 kg/m³, besonders bevorzugt zwischen 10 und 60 kg/m³ aufweist;
b) Ausformen der gewünschen Form der Mischung aus Schritt a) während der fließfähigen Phase;
c) Aushärten des Verbundstoffes.

## Beschreibung

Die Erfindung betrifft einen mineralischen Verbundstoff enthaltend einen festen silikatischen Schaum als Matrix und Blähglasgranulat als trockenen Füllstoff in dieser Matrix, der optional mit leistungsverändernden Additiven versetzt werden kann, sowie das Verfahren zur Herstellung dieses mineralischen Verbundstoffes. Verwendung findet dieser Verbundstoff vor allem bei der Herstellung von wärme- und schalldämmenden Platten und Körpern sowie als Brandschutz- und Feuerwiderstandsschaum.

Mineralische Formkörper und Formschäume finden als Dämmstoffe und feuerfeste Materialien ein weites Anwendungsgebiet. Im Stand der Technik sind Formkörper aus verschiedenen Füllstoffen und mineralischen Bindemitteln bekannt. So beschreibt die WO98/32713 einen Leichtwerkstoff enthaltend geblähten Perlit und Alkalisilikate. Die DE 100 60 875 beschreibt einen mineralischen Formkörper enthaltend ein Blähglasgranulat als Leichfüllstoff und ein Alkalisilikat als Bindemittel.

Nachteile der mineralischen Formkörper ergeben sich in der teuren Herstellungsweise. Aufgrund des Wasseranteils der verschiedenen silikatischen Systeme ist der Energieeintrag zum Trocknen der Formkörper nicht unbeachtlich.

Ausgehend von diesem Stand der Technik war es daher die technische Aufgabe der vorliegenden Erfindung Formkörper und Formschäume bereitzustellen, die bei der Herstellung weniger Energie benötigen und daher kostengünstiger sind. Weiterhin war es die technische Aufgabe die Festigkeit, schall- und wärmedämmende Eigenschaften und den Feuerwiderstand von mineralischen Formkörpern und Formschäumen zu erhöhen.

Die technische Aufgabe wird gelöst durch einen mineralischen Verbundstoff, enthaltend einen festen silikatischen Schaum als Matrix und Blähglasgranulat als trockenen Füllstoff in dieser Matrix.

Der erfindungsgemäße mineralische Verbundstoff weist eine höhere Festigkeit, höhere schall- und wärmedämmende Eigenschaften und einen höheren Feuerwiderstand auf. Erfindungsgemäß wird dies durch das Einmischen von Blähglasgranulaten in den silikatischen Schaum als Matrix erreicht.

In einer bevorzugten Ausführungsform weist das im Verbundstoff eingesetzte Blähglasgranulat einen Wassergehalt ("abspaltbare Wasseranteile") von unter 5 Gew.-%, vorzugsweise von unter 2,5 Gew.-%, besonders bevorzugt von unter 1 Gew.-% auf, wobei die Definition des Wassergehaltes bzw. der abspatlbaren Wasseranteile nicht die Ausgleichsfeuchte umfasst. Im Blähglasgranulat liegen die Wasseranteile sowohl als physikalisch gebundenes Wasser (Feuchte), als auch als chemisch gebundenes Wasser (Hydratwasser) vor. Diese Wasseranteile sowie mögliche in Gitterstrukturen gebundene Wasseranteile werden mit dem Begriff "abspaltbare Wasseranteile" zusammengefasst. Ganz besonders bevorzugten Ausführungsform ist das im Verbundstoff eingesetzte Blähglasgranulat im Wesentlichen wasserfrei, das heißt es enthält im Wesentlichen keine abspaltbaren Wasseranteile.

Das Blähglasgranulat als trockener Füllstoff in dieser Matrix reduziert den Wasseranteil in dem silikatischen Gesamtsystem. Dadurch werden verfahrenstechnische Eigenschaften bei der Produktion des erfindungsgemäßen Verbundstoffes verbessert. So verringert sich zum Beispiel die zu verdampfende Wassermenge und damit der Energieeintrag zum Trocknen des erfindungsgemäßen Verbundstoffes.

Im Vergeich zu reinen silikatischen Schäumen verbessern sich durch den Zusatz von Blähglasgranulat weitere physikalische und chemische Eigenschaften. So entsteht über den Einsatz von Blähglasgranulat eine verstärkende Bewehrung in dieser Matrix, die zum Beispiel eine Erhöhung der Festigkeit zur Folge hat. Die Bewehrung mit Blähglasgranulat in der Matrix verbessert ebenso die schalltechnischen Eigenschaften, die Wärmeleitfähigkeit und den Feuerwiderstand. Ein weiterer Vorteil ist die Einbindung des porösen Blähglasgranulates in eine Struktur mit ähnlichen physikalischen Eigenschaften.

Besonders überraschend ist der hohe Feuerwiderstand des erfindungsgemäßen Verbundstoffes. Wird der erfindungsgemäße Verbundstoff bzw. ein entsprechendes Formteil einer Temperatur von 1.200 °C ausgesetzt (z.B. einer Gasbrennerflamme), so zeigt sich weder eine signifikante Gas- oder Dampfbildung noch ein signifikantes Schrumpfen. Es bildet sich lediglich eine 1 bis 2 mm starke Keramikhaut auf der Oberfläche des Verbundstoffes an der Stelle, die dem Brenner ausgesetzt ist. Damit eignet sich der erfindungsgemäße Verbundstoff besonders gut als Feuerschutzelement.

Der mineralische Verbundstoff gemäß der vorliegenden Erfindung weist einen sehr guten Feuerwiderstand auf. In bevorzugter Weise erfüllt der mineralische Verbundstoff diesbezüglich der genormten Baustoffklasse A1, wobei mindestens eine der Europäischen Normen EN ISO 1182, EN ISO 1716 und EN 13823 erfüllt werden. Diese Qualitat erhält der erfindungsgemäße mineralische Verbundstoff vorzugsweise dann, wenn höchstens 1 Gew.-% organische Fasern, bevorzugt im Wesentlichen keine organischen Bestandteile enthalten sind. Besonders bevorzugt besteht der mineralische Verbundstoff im Wesentlichen aus einem festen silikatischen Schaum als Matrix und Blähglasgranulat als trockenen Füllstoff in dieser Matrix.

In einer weiteren bevorzugten Ausführungsform weist das im Verbundstoff eingebrachte Blähglasgranulat eine Schüttdichte zwischen 10 und 400 kg/m³, vorzugsweise zwischen 10 und 300 kg/m³, besonders bevorzugt zwischen 10 und 60 kg/m³ auf. Vorzugsweise beträgt die Menge des eingesetzten Blähglasgranulats, gemessen bei der Herstellung unter 80 Gew.-%, bevorzugt unter 70 Gew.-%, besonders bevorzugt zwischen 20 und 60 Gew.-%.

In einer bevorzugten Ausführungsform weist das Blähglasgranulat eine Schüttdichte zwischen 10 und 300 kg/m³, vorzugsweise zwischen 10 und 60 kg/m³ auf.

Die silikatische Schaummatrix ist ein mineralischer silikatischer Schaum bestehend aus Silikaten ausgewählt aus der Gruppe Natrium-, Kalium- und Magnesiumsilikaten. Bevorzugt wird Natriumsilikat (Wasserglas) gewählt, weil dies der Schaummatrix und damit dem Verbundstoff besondere Festigkeit verleiht.

Bevorzugt beträgt das Expansionsverhältnis der flüssigen zur gasförmigen Phase in der Schaummatrix unter 25.

In einer weiteren Ausführungsform besitzt der ausgehärtete Verbundstoff eine Rohdichte unter 500 kg/m³, vorzugsweise unter 200 kg/m³, bevorzugt unter 150 kg/m³, besonders bevorzugt von unter 100 kg/m³, ganz besonders bevorzugt von unter 70 kg/m³ und am meisten bevorzugt von unter 50 kg/m³.

In einer weiteren bevorzugten Ausführungsform besitzt der Verbundstoff eine Wärmeleitfähigkeit unter 0,050 W/mK. Vorzugsweise ist der Feuerwiderstand des mineralischen Verbundstoffes höher als der des silikatischen Schaumes und höher als der des Blähglasgranulates an sich.

In bevorzugten Ausführungsformen sind zusätzlich zum Blähglasgranulat weitere Füllstoffe enthalten, ausgewählt aus der Gruppe Steinwolle, Wollastonite, Glaswolle, Ton, Blähton, Blähschiefer und Perlite. Bevorzugt werden Additive zugesetzt, die dem Verbundstoff spezielle Eigenschaften und Funktionen verleihen, ausgewählt aus den folgenden Funktionen Aktivierung der Oberflächen, Färbung, Erzeugung von Düften, Stabilisierung, Erhöhung des Feuerwiderstandes, fungizide und/oder biozide Wirkung, Konservierung, Kleben, Schallabsorbierung und Veränderung der Wärmestrahlung, der Wärmeleitung sowie der Konvektion.

In einer weiteren Ausführungsform ist bevorzugt, dass der mineralische Verbundstoff als Formkörper ausgebildet ist und ein- oder beidseitig mit mindestens einer Beschichtung versehen ist, die ausgewählt ist aus der Gruppe Glasgewebe, Aliminiumfolie, Metallbleche, Metallfolie, Papier, Pappe, Kunststoff, Textilien, Holz, Putz- oder Putzträger. Weiterhin können zusätzliche Komponenten im Verbundstoff enthalten sein ausgewählt aus der Gruppe verstärkende Gewebe, Stützrahmen, Leitungen, Kabel, elektronische und/oder mechanische Bauteile.

Der erfindungsgemäße Verbundstoff wird hergestellt durch ein Verfahren mit den folgenden Schritten:
a) Mischen eines Blähglasgranulates als aktiven Füllstoff mit einem silikatischem Schaum als Matrix, wobei das Blähglasgranulat vorzugsweise eine Schüttdichte zwischen 10 und 400 kg/m³, bevorzugt zwischen 10 und 300 kg/m³, besonders bevorzugt zwischen 10 und 60 kg/m³ aufweist;
b) Ausformen der gewünschen Form der Mischung aus Schritt a) während der fließfähigen Phase;
c) Aushärten des Verbundstoffes.

In einem bevorzugten Verfahren erfolgt das Ausformen über ein Versprühen im Sprühturm. Damit wird ein neues Granulat mit besseren Eigenschaften als die Einzelkomponenten erzeugt. Insbesondere kann zur Erzeugung des Verbundstoffes sehr feines Blähglasgranulat mit einer Körnung bevorzugt kleiner 300 µm als aktiver Füllstoff zusammen mit silikatischem Schaum-Matrix versprüht werden. In einem weiteren bevorzugten Verfahren wird die silikatische Schaummatrix in das Blähglasgranulat in Schritt a) injiziert. Bevorzugt wird bei der Formgebung in Schritt b) des Verfahrens ein Druck angelegt. Weiterhin ist bevorzugt, dass beim Aushärten in Schritt c) ein Druck angelegt wird.

In einem bevorzugten Verfahren weist das eingesetzte Blähglasgranulat einen Wassergehalt ("abspaltbare Wasseranteile") von unter 5 Gew.-%, vorzugsweise von unter 2,5 Gew.-%, besonders bevorzugt von unter 1 Gew.-% auf, wobei die Definition des Wassergehaltes bzw. der abspatlbaren Wasseranteile nicht die Ausgleichsfeuchte umfasst. Ganz besonders bevorzugt wird ein Blähglasgranulat eingesetzt, das im wesentlichen wasserfrei ist.

In dem Verfahren wird vorzugsweise Blähglasgranulat eingesetzt, das eine Schüttdichte zwischen 10 und 400 kg/m³, vorzugsweise zwischen 10 und 300 kg/m³, besonders bevorzugt zwischen 10 und 60 kg/m³ aufweist. Das Blähglasgranulat wird bei der Herstellung vorzugsweise in einer Menge von unter 80 Gew.-%, bevorzugt unter 70 Gew.-%, besonders bevorzugt zwischen 20 und 60 Gew.-% eingesetzt.

Zur Herstellung des erfindungsgemäßen Verbundstoffes wird vorzugsweise als silikatische Schaummatrix ein mineralischer silikatischer Schaum bestehend aus Silikaten ausgewählt aus der Gruppe Natrium-, Kalium- und Magnesiumsilikaten besonders bevorzugt Natriumsilikat (Wasserglas) verwendet.

Bei dem Herstellungsverfahren wird das Expansionsverhältnis der flüssigen zur gasförmigen Phase bevorzugt auf unter 25 eingestellt.

Mit dem Verfahren werden Verbundstoffe hergestellt, die nach dem Aushärten bevorzugt eine Rohdichte unter 500 kg/m³, vorzugsweise unter 200 kg/m³, bevorzugt unter 150 kg/m³, besonders bevorzugt von unter 100 kg/m³, ganz besonders bevorzugt von unter 70 kg/m³ und am meisten bevorzugt von unter 50 kg/m³ besitzen.

Durch das Verfahren werden vorzugsweise Verbundstoffe hergestellt, die eine Wärmeleitfähigkeit von unter 0,050 W/mK besitzen. Bevorzugt ist dabei, dass der Feuerwiderstand des mineralischen Verbundstoffes höher ist als der des silikatischen Schaumes und höher ist als der des Blähglasgranulates an sich.

In einem bevorzugten Verfahren werden zusätzlich zum Blähglasgranulat weitere Füllstoffe enthalten sind, ausgewählt aus der Gruppe Steinwolle, Wollastonite, Glaswolle, Ton, Blähton, Blähschiefer und Perlite. Bevorzugt werden in dem Verfahren Additive zugesetzt, die dem Verbundstoff spezielle Eigenschaften und Funktionen verleihen, ausgewählt aus den folgenden Funktionen Aktivierung der Oberflächen, Färbung, Erzeugung von Düften, Stabilisierung, Erhöhung des Feuerwiderstandes, fungizide und/oder biozide Wirkung, Konservierung, Kleben, Schallabsorbierung und Veränderung der Wärmestrahlung, der Wärmeleitung sowie der Konvektion.

Der Formkörper kann in dem Herstellungsverfahren zusätzlich ein- oder beidseitig mit mindestens mit einer Beschichtung versehen werden, ausgewählt aus der Gruppe Glasgewebe, Aliminiumfolie, Metallbleche, Metallfolie, Papier, Pappe, Kunststoff, Textilien, Holz, Putz- oder Putzträger. Auch können zusätzliche Komponenten in dem Verbundstoff eingebracht werden ausgewählt aus der Gruppe verstärkende Gewebe, Stützrahmen, Leitungen, Kabel, elektronische und/oder mechanische Bauteile.

Die mineralischen Verbundstoffes werden bevorzugt verwendet zur Herstellung von Wärmedämmformteilen und -platten, Schalldämmformteilen und - platten, Feuerwiderstandsformteilen und -platten, Brandschutzformteilen und - platten Vakuumisolationsformteilen und -platten, Bauschäumen- und Klebern, Deckenplatten, Wandplatten, Bodenplatten und Sandwich-Elementen.

Eine signifikante Verdichtung des Verbundstoffes bei der Produktion ist nicht notwendig aber möglich. In die silikatische Schaummatrix können zusätzliche Additive beigemischt werden, auch solche, die sich normalerweise nicht mit Silikaten mischen. Diese Additive sind neben den Eigenschaften vom Blähglasgranulat mit entscheidend für die Ausprägung der jeweiligen Produkteigenschaften.

Diese Additive in der Schaummatrix, sowie das Blähglasgranulat können spezielle Eigenschaften und Funktionen im Verbundstoff übernehmen, wie Aktivierung der Oberflächen, Färbung, Erzeugung von Düften, Stabilisierung, Erhöhung des Feuerwiderstandes, fungizide und/oder biozide Wirkung, Konservierung, Kleben, Schallabsorbierung und Veränderung der Wärmestrahlung, der Wärmeleitung sowie der Konvektion. Neben Blähglasgranulat können als Füllstoff zusätzlich andere Füllstoffe, wie zum Beispiel Steinwolle, Wollastonite, Glaswolle, Ton, Blähton, Blähschiefer und Perlite zur Verbesserung oder Modifizierung der Eigenschaften des mineralsichen Verbundstoffes verwendet werden.

Der mineralische Verbundstoff kann an einer oder mehreren Seiten mit einer oder mehreren Lagen beschichtet werden. Die Beschichtung kann zum Beispiel aus Glasgewebe, Aliminiumfolie, Metallblechen - oder -folien, Papier, Pappe, Kunststoff, Textilien, Putz- oder Putzträger und Holz bestehen. Diese Beschichtungen können unter anderem die physikalischen Eigenschaften, wie zum Beispiel das Elastizitätsmodul, die Druckfestigkeit, die Wasseraufnahme, die Temperaturbeständigkeit, die Schalldämmung, die Wärmedämmung, die Witterungsbeständigkeit, die Kantenbruchfestigkeit und die Dauerhaftigkeit verbessern.

Die Herstellung und die Eigenschaften der Bestandteile (Matrix und Blähglasgranulate als Füllstoff) des erfindungsgemäßen Verbundstoffes werden in den folgenden Abschnitten dargestellt.

**der silikatische Schaum als Matrix**

Der silikatische Schaum als Matrix wird hergestellt, indem Silikate unter Druck in einen Mixer gegeben werden, und in diesen Mixer zudem ein Trägergas unter Druck eingeleitet wird. Das Silikat und das Trägergas werden intensiv gemischt, wobei ein Schaum aus Trägergas und Silikat gebildet wird, der über eine Öffnung im Mixer bereitgestellt wird. Zur Herstellung des erfindungsgemäßen Verbundstoffes wird vor dem Erhärten des silikatischen Schaums Blähglasgranulat hinzugegeben.

Als Trägergas zur Herstellung des Schaums können Sauerstoff, Stickstoff, Luft, Kohlendioxid, Kohlenmonoxid oder Gemische derselben verwendet werden. Das Silikat bzw. die silikatische Verbindung ist vorzugsweise ausgewählt aus der Gruppe aus der Gruppe Natrium-, Kalium- und Magnesiumsilikaten. Insbesondere ist Natriumsilikat (Wasserglas) bevorzugt, das einen besonders festen Schaum ergibt. Wasserglas gehört zu der Gruppe der löslichen Natriumsilikatverbindungen. Die Formel von Natriumsilikat variiert von Na₂O₃ · SiO₂ bis 2 Na₂OSiO₂, abhängig von der verwendeten Wassermenge.

**das Blähglasgranulat als Füllstoff**

Das Blähglasgranulat wird hergestellt indem zunächst Gläser oder geeignete Silikate mit einer wässrigen Alkalimetallhydroxid-Lösung und/oder Alkalimetallsilikatlösung als wässrige Suspension bei Temperaturen von 60 bis 120 °C reagieren, das erhaltene Reaktionsprodukt als viskose Masse ausgetragen wird, dieses granuliert und das schließlich das feste Granulat durch ein- oder zweistufiges Erhitzen aufgebläht wird. Als Glas wird z.B. Recyclingglas, synthetisches Glas, mineralisches Glas natürlichen Ursprungs oder Gemische derselben verwendet.

Das Blähglasgranulat wird vorzugsweise durch das folgende näher beschriebene Verfahren hergestellt, indem man:
a. Gläser mit einer wässrigen Alkalimetallhydroxid-Lösung und/oder Alkalimetallsilikatlösung als wässrige Suspension bei Temperaturen von 60 bis 120° C bei Normaldruck reagieren lässt,
b. das erhaltene Reaktionsprodukt als viskose Masse austrägt, granuliert, vorzugsweise im viskosen Zustand und so lange abkühlt bis eine feste Granulatkörnung vorliegt,
c. das Granulat durch Erhitzen aufbläht, wobei das Erhitzen in ein oder zwei Stufen erfolgen kann
und das einstufige Erhitzen bei Temperaturen von 200 bis 300°C für eine Zeitdauer von 2 Millisekunden bis 15 min oder bei Temperaturen von 400 bis 800°C für eine Zeitdauer von 2 Millisekunden bis 15 min erfolgt
und das zweistufige Erhitzen in der ersten Stufe bei Temperaturen von 200 bis 300°C für eine Zeitdauer von 2 Millisekunden bis 15 min erfolgt und in der zweiten Stufe bei Temperaturen von 400 bis 800°C für eine Zeitdauer von 2 Millisekunden bis 15 min erfolgt.

Bei der Herstellung des Blähglasgranulates erfogt das Erhitzen des Gemisches vorzugsweise bei Temperaturen von 120 bis 250 °C bei Autoklavenatmosphäre von 2 bis 15 bar. Die verwendeten Gläser zur Herstellung des Blähglasgranulates enthalten bevorzugt 60 bis 85 Gew.-% SiO₂, 4 bis 27 Gew.-% Na₂O, 0 bis 5 Gew.-% K₂O, 0 bis 8 Gew.-% CaO, 0 bis 5 Gew.-% Al₂O₃, 0 bis 14 Gew.-% B₂O₃, 0 bis 20 Gew.-% PbO, 0 bis 5 Gew.-% MgO und 0 bis 8 Gew.-% BaO.

Zur Herstellung des Blähglasgranulates enthalten die verwendeten Gläser besonders bevorzugt die folgende Zusammensetzung: 65 bis 80 Gew.-% SiO₂, 4 bis 14 Gew.-% Na₂O, 0 bis 3 Gew.-% K₂O, 0 bis 3 Gew.-% CaO, 1 bis 3 Gew.-% Al₂O₃, 5 bis 13 Gew.-% B₂O₃, 0 bis 5 Gew.-% PbO, 0 bis 3 Gew.-% MgO und 0 bis 3 Gew.-% BaO.

Für das Blähglasgranulat erfolgt der Einsatz von PbO-haltigen Gläsern besonders bevorzugt für Anwendungen im Bereich des Schallschutzes. Das Aufblähen des Granulates wird vorzugsweise bei 250 bis 280 °C und/oder bei 550 bis 580 °C durchgeführt.

Zur Herstellung des Blähglasgranulates erfolgt das Erhitzen des Granulates beim Aufblähen mittels Mikrowelle, IR-Strahlung, elektrischer Induktion, durch heiße Gase oder indirekte Wärmestrahlung.

Weiterhin werden in das Innere des Blähglasgranulates vorzugsweise Silikone eingebracht. Zusätzlich können Silikone aber auch in herkömmlicher Weise auf die Oberfläche des Blähglasgranulates aufgebracht werden. Zur Verbesserung der Druckfestigkeit werden bevorzugt Füll- und Verstärkungsstoffe ausgewählt aus der Gruppe Perlit, Kaolin, Metakaolin, Glimmer, Wollastonit, Glasfaser, Cristobalit, Quarz, Talkum, Sepiolith, Baryt, Feldspat, Bariumsulfat, Zinkoxid, Titandioxid oder kalzinierter Bauxit oder Gemische derselben in das Blähglasgranulat eingebracht.

Die Blähglasgranulate besitzen den Vorteil, dass sie aus preiswerten Rohstoffen, nämlich Recyclinggläsern, hergestellt werden, die bei Einwirkung von Temperatur ein Produkt mit hoher Porosität und niedriger Dichte bei ausreichender Festigkeit entstehen lässt. Es werden weiterhin keine zusätzlichen Komponenten wie Härter- oder Treibmittel benötigt. Die Aufblähdauer wird kurz gehalten und kann bei relativ niedrigen Temperaturen durchgeführt werden. Durch das Aufschäumen in zwei Stufen können z.B. auch Blähglasgranulat-Produkte hergestellt werden, die sehr geringe Schüttdichten von 0,01 bis 0,05 g/cm³ bei einem Korndurchmesser von 1 bis 15 mm aufweisen. Die Leichtstoffe weisen in Abhängigkeit von ihrer Schüttdichte eine gute Festigkeit und Volumenstabilität auf. Sie besitzen weiterhin eine weiße Farbe, mikroporöse Zellenstruktur und sind sogar auch als kugelförmige Produkte herstellbar. Weiterhin ist die Herstellung von geschlossenen wie auch offenen Porenstrukturen möglich und die Produkte können hydrophil oder hydrophob ausgestattet werden.

Das Blähglasgranulat kann neben der Verwendung als Schüttgut auch zur Herstellung entsprechender Formkörper und Platten zum Beispiel für Isolations-oder Schallabsorptionszwecke verwendet werden. Gemäß der vorliegenden Erfindung werden die Blähglasgranulate in einen silikatischen Formschaum als Füllstoff eingebracht. Dadurch entsteht ein Produkt (silikatischer Formschaum bzw. ein silikatischer Formkörper), mit ganz besonderen überraschenden Eigenschaften.

Die Blähglasgranulate sind leicht, mineralisch, lagerfähig, nicht zusammenbackend und transportfähig als freifließende Schüttung. Nachfolgend wird das Herstellungsverfahren ausführlicher erläutert. Als Ausgangsstoff wird bevorzugt Recycling-Borglas oder Neonröhren-Recyclingglas eingesetzt. Diese Gläser werden mit Natronlauge und/oder Natronwasserglas 37/40 Henkel KGaA vermischt, es wird gegebenenfalls Wasser zugegeben und diese Suspension bei Temperaturen von 60 bis 120 °C bei Normaldruck gemischt. Unter Umrühren werden die Rohstoffe bei 60 bis 120°C zehn Minuten bis drei Stunden lang bei Normaldruck oder Autoklavendruck zur Reaktion gebracht.

Alternativ ist es auch möglich, diese Reaktion im Autoklaven bei Temperaturen von 120 bis 250 °C und Drücken von 2 bis 15 bar durchzuführen. Es bildet sich eine homogene, viskose Masse, die in noch plastischem Zustand ausgetragen, anschließend durch eine Lochscheibe gepresst und durch eine an der Außenseite der Lochscheibe liegende Schneidvorrichtung zerkleinert wird. Die granulierte Masse wird mit Quarzmehlpulver bepudert, was mögliche Agglomerationen der Granalien sowie mögliche Anbackungen vermeidet. Man erhält nach Abkühlung auf Raumtemperatur trockene, harte Granulatteilchen. Ein zusätzlicher Trocknungsschritt ist nicht notwendig.

In einem weiteren Verfahrensschritt zur Herstellung des Blähglasgranulates wird dann das erhaltenen Produkt aufgebläht, dies erfolgt in ein oder zwei Stufen. Beim einstufigen Aufblähen wird das Reaktionsprodukt für 2 Millisekunden bis 15 min auf Temperaturen von 200 bis 300 °C oder für eine Zeitdauer von 2 Millisekunden bis 15 min auf Temperaturen von 400 bis 800°C erhitzt. Beim zweistufigen Aufblähen wird das Produkt in einem ersten Schritt durch Erhitzen auf Temperaturen von 200 bis 300 °C, vorzugsweise 250 bis 280 °C, zum Aufschäumen gebracht. Dies kann beispielsweise in einem Laborofen geschehen. In einem zweiten Schritt wird das aufgeschäumte Produkt dann durch Erhitzen auf Temperaturen von 400 bis 800 °C, vorzugsweise 550 bis 580 °C zum weiteren Aufschäumen gebracht. Der zweite Aufblähschritt wird bevorzugt in einem Flugstromcalcinator durchgeführt.

In einer bevorzugten Ausführungsform erfolgt das Aufblähen insbesondere zur Herstellung feinteiliger Schaumprodukte in einem Pulsationsreaktor im Gasstrom. Bei Anwendung des Pulsationsreaktors findet das Aufblähen in sehr ku r-zer Zeit innerhalb von Sekundenbruchteilen statt. Das Aufblähen kann aber auch in einem herkömmlichen Trockenschrank bzw. Heizofen erfolgen.

Nach dem Abkühlen erhält man Schaumprodukte mit einem geringen Schüttvolumen von 0,01 bis 0,05g/cm³ und guter Kornstabilität und Druckfestigkeit.

Bei der Reaktion der Gläser mit der Alkalimetallhydroxid -und/oder Alkalimetallsilikat- Lösung wurde festgestellt, dass die bevorzugten Reaktionstemperaturen im Bereich von 80 bis 120 °C liegen. Weiterhin ist eine hohe relative Luftfeuchtigkeit während der Reaktion wünschenswert um unerwünschte Feuchtigkeitsverluste, insbesondere der Rezepturanteile mit direktem Luft/Feststoffkontakt zu vermeiden. Eine relative Luftfeuchtigkeit von 90 % und mehr ist wünschenswert.

Zur Herstellung des Blähglasgranulates kann die Reaktion der genannten Rohstoffe mit Wasser und miteinander durch Erhöhung von Temperatur und Druck beschleunigt werden. So kann die Rohstoffmischung als Suspension in Wasser in Schalen gefüllt werden, die im Autoklaven bei Drücken von 2 bis 15 bar und vorzugsweise 120 bis 250 °C zur blähfähigen Silikatmischung reagieren. Durch schnelles Ablassen des Autoklavendruckes expandiert die blähfähige Silikatmischung durch Freisetzen von Wasserdampf. Die hochviskos vorliegende Silikatmischung vergrößert das eingenommene Raumvolumen um ein Vielfaches. Der Wassergehalt der Silikatmischung wird dabei um mehr als 5 Gew.-% Wasseranteil verringert. Die vorgeschäumte Silikatmischung ist weiterhin blähfähig. Der Vorteil bei Verwendung der porenreichen Silikatmischung ist, dass die so hergestellten Partikel eine weitgehend offene Porenstruktur aufweisen. Zu feinstteiligem Silikatgranulat zerkleinert ermöglicht es die Herstellung von Schaumpartikeln mit Korngrößen von einigen Mikrometern. Solche Mikroschaumpartikel wurden hergestellt durch schnelles Einbringen externer Energie im Pulsationsreaktor.

Thermisches Blähen des Granulates erfolgt durch schnelles Einbringen externer Energie in die Granulate, beispielsweise über Mikrowellen, Infrarotstrahlung, elektrische Induktion, heiße Gase oder indirekte Wärmestrahlung.

Feinteiliger Schaum im Korngrößenbereich von 100 bis 3000 µm kann mittels Sprühtrocknung hergestellt werden wenn der Temperaturgradient im Sprühtrockner auf etwa 500 °C erhöht wird. Es wurden pumpfähige, wässerige Rohmischungen auf Basis von Borglas im Sprühtrockner bei Gaseintrittstemperaturen in Höhe von 500 bis 600 °C versprüht. Hierbei wurde zuerst das überschüssige Wasser verdampft. Anschließend wurden die Sprühkörner gebläht. Der Restwassergehalt beträgt hierbei < 5 Gew.-%, das Schüttvolumengewicht 50 bis 200 g/l.

Der Restwassergehalt ist von Bedeutung für den Blähprozeß; zum Erreichen von kugelförmigen Blähprodukten sollte eine Restfeuchte von 20 bis 35 Gew.-% vorliegen. Bei einem abspaltbarem Wassergehalt > 35 Gew.-% werden weiterhin blähfähige Granulate hergestellt. Allerdings führen derartig hohe Wassergehalte bei 500 bis 600 °C bei einstufigem Aufblähen zu verstärkten Agglomerationen zwischen den geblähten Körnungen sowie zu einer Mischung von Mikro- und Makroporen. Bei einem abspaltbarem Wassergehalt < 20 Gew.-% werden weiterhin blähfähige Granulate hergestellt. Allerdings führen derartig niedrige Wassergehalte nicht zu kugelförmigen Körnungen. Die geblähten Granalien weisen eine eher splitterige Kornform auf. In den Schaumprodukten, die nach dem erfindungsgemäßen Verfahren hergestellt wurden, liegen Wasseranteile sowohl als physikalisch gebundenes Wasser (Feuchte), als auch als chemisch gebundenes Wasser (Hydratwasser) vor. Diese Wasseranteile sowie mögliche in Gitterstrukturen gebundene Wasseranteile werden mit dem Begriff "abspaltbare Wasseranteile" zusammengefasst.

Zur Erniedrigung der Schüttdichte und Erhöhung der Festigkeit des Blähglasgranulates werden bevorzugt 0,01 bis 5, vorzugsweise 0,5 bis 2,0 Gew-%, OH-funktionelle wasserverdünnbare Additive zugegeben. Besonders bevorzugt sind Glycerin und/oder Ethylenglykol.

Für den Anwendungsfall einer wasserabweisendenden Stoffeigenschaft werden Silikone verwendet. Die Silikone können sowohl auf die Oberflächen des geblähten Silikatleichtschaumes gesprüht werden, als auch der Silikatrezeptur bereits zu Beginn der Herstellung in flüssiger Form, zum Beispiel der Wasserkomponente untergemischt werden. Obschon die wasserfreien Silikone bei Raumtemperatur praktisch unlöslich in Wasser sind, konnte bei letztgenanntem Verfahren das nicht-wässrige Silikon in der wässrigen Silikatphase emulgiert werden. Es wurde festgestellt, dass die Silikat/Silikonöl-Emulsion auch in den nachfolgenden Verfahrensschritten des Erhitzens und Blähens nicht entmischt, so dass es möglich ist auch bei geringen Silikonölmasse-Anteilen jedes Granulatkorn mit einer definierten Menge Silikonöl herzustellen.

Beim Aufschäumen führt der Silikonöl-Anteil in den Granulatkörnern zu einer Hydrophobierung der Mikroporenstruktur des Silikatschaumes, die selbst bei Aufblähtemperaturen von 550 °C erhalten bleibt. Die ab 250°C beginnende thermische Zersetzung der Silikonöl-Struktur wurde nicht festgestellt.

Durch Zugabe von Silikonen in Mengen von 0,05 bis 3, bevorzugt 1 Gew.-%, können innen und/oder außen hydrophobierte Schaumpartikel hergestellt werden. Durch Verlängerung der Verweilzeit der sich bildenden Schaumpartikel auf ca. 3 min im Kammerofen in der Temperaturzone von 550 °C konnten die Silikone der äußeren Schaumhülle definiert zerstört werden, obwohl die Silikone im Inneren der Schaumpartikel unversehrt bleiben. Dies ist für zahlreiche Anwendungen von großer Bedeutung, die zum Beispiel in wässrigen gips- bzw. zementgebundenen Systemen gute Benetzung und Anbindung an eine hydrophile Oberfläche bevorzugen, aber gleichzeitig einen geringen Wasseranspruch des Leichtzuschlagstoffes benötigen.

Die nachfolgenden Beispiele sollen den Gegenstand der Erfindung näher erläutern ohne ihn zu beschränken.

### BEISPIELE

### Beispiel 1: Herstellung des erfindungsgemäßen Verbundstoffes

Der Verbundstoffes wird hergestellt, indem zunächst der silikatische Schaum als Matrix gebildet wird, wobei Wasserglas (Natriumsilikat: Na₂O₃ · SiO₂ , bzw. 2 Na₂OSiO₂) in einen unter Druck Mischer gegeben und in diesen Mischer unter Druck Luft eingeleitet wird. Das Silikat und die Luft werden intensiv gemischt, wobei ein Schaum aus der zugeführten Luft und dem Silikat gebildet wird. Die Schaummatrix wird dann zur Herstellung des erfindungsgemäßen Verbundstoffes in eine Mischung aus Blähglasgranulat injiziert. Das Expansionsverhältnis der flüssigen zur gasförmigen Phase betrug 10.

Der Gehalt an Blähglasgranulaten (20 g/l) in der Anfangsmischung zur Herstellung des Verbundstoffes wurde auf 50 Vol-% eingestellt. Blähglasgranulate folgender chemischer Zusammensetzungen (wasserfrei) wurden für die Herstellung der Verbundstoffe verwendet:
a) 17,5 % Na₂O; 0,5 % K₂O; 1,8 % Al₂O₃; 69,0 % SiO₂ und 11,2 % B₂O₃
b) 25,5 % Na₂O; 0,4 % K₂O; 1,6 % Al₂O₃; 10,0 % B₂O₃; 62,5 % SiO₂
c) 13,1 % Na₂O; 0,5 % K₂O; 1,8 % Al₂O₃; 72,8 % SiO₂ und 11,8 % B₂O₃
d) 25,9 % Na₂O; 1,7 % Al₂O₃; 62,3 % SiO₂ und 10,0 % B₂O₃
e) 18,2 % Na₂O; 5,4 % Al₂O₃; 67,5 % SiO_{2;} 6,9 % B₂O₃ und 2,0 % K₂O
f) 20,3 % Na₂O; 0,9 % Al₂O₃; 67,5 % SiO_{2;} 5,0 % B₂O_{3;} 0,4 % K₂O, 4,2% CaO und 1,8 % MgO;
g) 20,5% Na₂O; 2,6 % K₂O; 5,6 % PbO; 2,5 % CₐO; 1,7 % MgO; 1,7 % Al₂O₃; 65,3% SiO₂

### Beispiel 2: Beobachtung des Feuerwiderstandes bzw. der Feuerresistenz des erfindungsgemäßen Verbundstoffes

Die Verbundstoffe aus Beispiel 1 wurden folgendem Test zur Bestimmung des Feuerwiderstandes unterworfen. Ein Formteil gemäß der vorliegenden Erfindung aus Beispiel 1 wird einer Brennerflamme mit einer Temperatur von 1.200 °C für 15 Minuten ausgesetzt. Es wurde keine Gasbildung und auch keine Dampfbildung beobachtet. Weiterhin konnte keinerlei Schrumpfung des Formteiles bei der Hitzebehandlung beobachtet werden. Nach ca. 0,5 Minuten bildet sich eine 1 bis 2 mm starke Keramikhaut an der Stelle auf der Oberfläche des Formteiles, auf die die Brennerflamme gerichtet ist. Aus dieser Beobachtung wird geschlossen, dass der erfindungsgemäße Verbundstoff als Feuerschutzelement sehr gut geeignet ist.

### Vergleichsbeispiel 3: Beobachtung des Feuerwiderstandes eines reinen silikatischen Formschaumes des Standes der Technik

Der silikatische Schaum aus Wasserglas (Natriumsilikat) und einem Trägergas alleine (ohne Füllstoffe) wurde ebenfalls dem Test zur Bestimmung des Feuerwiderstandes gemäß Beispiel 2 unterworfen. Der silikatische Schaum wird einer Brennerflamme mit einer Temperatur von 1.200 °C ausgesetzt. Dabei bildet sich nach einigen Sekunden Dampf und das Schaumformteil schrumpft.

## Patentansprüche

1. Ein mineralischer Verbundstoff, enthaltend einen festen silikatischen Schaum als Matrix und Blähglasgranulat als trockenen Füllstoff in dieser Matrix.

2. Der mineralische Verbundstoff nach Anspruch 1, **dadurch gekennzeichnet, dass** das eingesetzte Blähglasgranulat einen Wassergehalt ("abspaltbare Wasseranteile, abgesehen von der Ausgleichsfeuchte") von unter 5 Gew.-%, vorzugsweise von unter 2,5 Gew.-%, besonders bevorzugt von unter 1 Gew.-% aufweist.

3. Der mineralische Verbundstoff nach Anspruch 1, **dadurch gekennzeichnet, dass** das eingesetzte Blähglasgranulat im Wesentlichen wasserfrei ist.

4. Der mineralische Verbundstoff nach einem der Ansprüche 1 bis 3, **dadurch gekennzeichnet, dass** das Blähglasgranulat eine Schüttdichte zwischen 10 und 400 kg/m³, vorzugsweise zwischen 10 und 300 kg/m³, besonders bevorzugt zwischen 10 und 60 kg/m³ aufweist.

5. Der mineralische Verbundstoff nach einem der Ansprüche 1 bis 4, **dadurch gekennzeichnet, dass** die Menge des eingesetzten Blähglasgranulats, gemessen bei der Herstellung unter 80 Gew.-%, bevorzugt unter 70 Gew.-%, besonders bevorzugt zwischen 20 und 60 Gew.-% beträgt.

6. Der mineralische Verbundstoff nach mindestens einem der Ansprüche 1 bis 5, **dadurch gekennzeichnet, dass** die silikatische Schaummatrix ein mineralischer silikatischer Schaum ist bestehend aus Silikaten ausgewählt aus der Gruppe Natrium-, Kalium- und Magnesiumsilikaten, besonders bevorzugt Natriumsilikat (Wasserglas).

7. Der mineralische Verbundstoff nach mindestens einem der Ansprüche 1 bis 6, **dadurch gekennzeichnet, dass** das Expansionsverhältnis der flüssigen zur gasförmigen Phase unter 25 beträgt.

8. Der mineralische Verbundstoff nach einem der Ansprüche 1 bis 7, **dadurch gekennzeichnet, dass** der ausgehärtete Verbundstoff eine Rohdichte unter 500 kg/m³, vorzugsweise unter 200 kg/m³, bevorzugt unter 150 kg/m³, besonders bevorzugt von unter 100 kg/m³, ganz besonders bevorzugt von unter 70 kg/m³ und am meisten bevorzugt von unter 50 kg/m³ besitzt.

9. Der mineralische Verbundstoff nach mindestens einem der Ansprüche 1 bis 8, **dadurch gekennzeichnet, dass** der Verbundstoff eine Wärmeleitfähigkeit unter 0,050 W/mK besitzt.

10. Der mineralische Verbundstoff nach mindestens einem der Ansprüche 1 bis 9, **dadurch gekennzeichnet, dass** der Feuerwiderstand des mineralischen Verbundstoffes höher ist als der des silikatischen Schaumes und höher ist als der des Blähglasgranulates an sich.

11. Der mineralische Verbundstoff nach mindestens einem der Ansprüche 1 bis 10, **dadurch gekennzeichnet, dass** zusätzlich zum Blähglasgranulat weitere Füllstoffe enthalten sind, ausgewählt aus der Gruppe Steinwolle, Wollastonite, Glaswolle, Ton, Blähton, Blähschiefer und Perlite.

12. Der mineralische Verbundstoff nach mindestens einem der Ansprüche 1 bis 11, **dadurch gekennzeichnet, dass** Additive zugesetzt werden, die dem Verbundstoff spezielle Eigenschaften und Funktionen verleihen, ausgewählt aus den folgenden Funktionen Aktivierung der Oberflächen, Färbung, Erzeugung von Düften, Stabilisierung, Erhöhung des Feuerwiderstandes, fungizide und/oder biozide Wirkung, Konservierung, Kleben, Schallabsorbierung und Veränderung der Wärmestrahlung, der Wärmeleitung sowie der Konvektion.

13. Der mineralische Verbundstoff nach mindestens einem der Ansprüche 1 bis 12, **dadurch gekennzeichnet, dass** dieser als Formkörper ausgebildet ist und ein- oder beidseitig mit mindestens einer Beschichtung versehen ist, ausgewählt aus der Gruppe Glasgewebe, Aliminiumfolie, Metallbleche, Metallfolie, Papier, Pappe, Kunststoff, Textilien, Holz, Putz- oder Putzträger.

14. Der mineralische Verbundstoff nach mindestens einem der Ansprüche 1 bis 13, **dadurch gekennzeichnet, dass** zusätzliche Komponenten im Verbundstoff enthalten sind ausgewählt aus der Gruppe verstärkende Gewebe, Stützrahmen, Leitungen, Kabel, elektronische und/oder mechanische Bauteile.

15. Formkörper enthaltend oder bestehend aus einem mineralischen Verbundstoff nach einem der Ansprüche 1 bis 14.

16. Ein Verfahren zur Herstellung eines mineralischen Verbundstoffes enthaltend einen festen silikatischen Schaum als Matrix und Blähglasgranulat als trockenen Füllstoff in dieser Matrix, mit den folgenden Schritten:
a) Mischen eines Blähglasgranulates als aktiven Füllstoff mit einem silikatischem Schaum als Matrix, wobei das Blähglasgranulat vorzugsweise eine Schüttdichte zwischen 10 und 400 kg/m³, bevorzugt zwischen 10 und 300 kg/m³, besonders bevorzugt zwischen 10 und 60 kg/m³ aufweist;
b) Ausformen der gewünschen Form der Mischung aus Schritt a) während der fließfähigen Phase;
c) Aushärten des Verbundstoffes.

17. Verfahren zur Herstellung eines mineralischen Verbundstoffes nach Anspruch 16, **dadurch gekennzeichnet, dass** die silikatische Schaummatrix in eine Mischung aus Blähglasgranulat nach Anspruch 16 Schritt a) injiziert wird.

18. Verfahren zur Herstellung eines mineralischen Verbundstoffes nach mindestens Anspruch 16 oder 17, **dadurch gekennzeichnet, dass** bei der Formgebung in Schritt b) ein Druck angelegt wird.

19. Verfahren zur Herstellung eines mineralischen Verbundstoffes nach mindestens einem der Ansprüche 16 bis 18, **dadurch gekennzeichnet, dass** beim Aushärten in Schritt c) ein Druck angelegt wird.

20. Verfahren zur Herstellung eines mineralischen Verbundstoffes nach mindestens einem der Ansprüche 16 bis 19, **dadurch gekennzeichnet, dass** das eingesetzte Blähglasgranulat einen Wassergehalt ("abspaltbare Wasseranteile, abgesehen von der Ausgleichsfeuchte") von unter 5 Gew.-%, vorzugsweise von unter 2,5 Gew.-%, besonders bevorzugt von unter 1 Gew.-% aufweist.

21. Verfahren zur Herstellung eines mineralischen Verbundstoffes nach mindestens einem der Ansprüche 16 bis 20, **dadurch gekennzeichnet, dass** das eingesetzte Blähglasgranulat im Wesentlichen wasserfrei ist.

22. Verfahren zur Herstellung eines mineralischen Verbundstoffes nach mindestens einem der Ansprüche 16 bis 21, **dadurch gekennzeichnet, dass** das eingesetzte Blähglasgranulat eine Schüttdichte zwischen 10 und 400 kg/m³, vorzugsweise zwischen 10 und 300 kg/m³, besonders bevorzugt zwischen 10 und 60 kg/m³ aufweist.

23. Verfahren zur Herstellung eines mineralischen Verbundstoffes nach mindestens einem der Ansprüche 16 bis 22, **dadurch gekennzeichnet, dass** das Blähglasgranulat in einer Menge von unter 80 Gew.-%, bevorzugt unter 70 Gew.-%, besonders bevorzugt zwischen 20 und 60 Gew.-% eingesetzt wird.

24. Verfahren zur Herstellung eines mineralischen Verbundstoffes nach mindestens einem der Ansprüche 16 bis 23, **dadurch gekennzeichnet, dass** als silikatische Schaummatrix ein mineralischer silikatischer Schaum bestehend aus Silikaten ausgewählt aus der Gruppe Natrium-, Kalium- und Magnesiumsilikaten, besonders bevorzugt Natriumsilikat (Wasserglas) verwendet wird.

25. Verfahren zur Herstellung eines mineralischen Verbundstoffes nach mindestens einem der Ansprüche 16 bis 24, **dadurch gekennzeichnet, dass** das Expansionsverhältnis der flüssigen zur gasförmigen Phase unter 25 beträgt.

26. Verfahren zur Herstellung eines mineralischen Verbundstoffes nach mindestens einem der Ansprüche 16 bis 25, **dadurch gekennzeichnet, dass** der ausgehärtete Verbundstoff eine Rohdichte unter 500 kg/m³, vorzugsweise unter 200 kg/m³, bevorzugt unter 150 kg/m³, besonders bevorzugt von unter 100 kg/m³, ganz besonders bevorzugt von unter 70 kg/m³ und am meisten bevorzugt von unter 50 kg/m³ besitzt.

27. Verfahren zur Herstellung eines mineralischen Verbundstoffes nach mindestens einem der Ansprüche 16 bis 26, **dadurch gekennzeichnet, dass** der Verbundstoff eine Wärmeleitfähigkeit unter 0,050 W/mK besitzt.

28. Verfahren zur Herstellung eines mineralischen Verbundstoffes nach mindestens einem der Ansprüche 16 bis 27, **dadurch gekennzeichnet, dass** der Feuerwiderstand des mineralischen Verbundstoffes höher ist als bei der des silikatischen Schaumes und höher ist als der des Blähglasgranulates an sich.

29. Verwendung eines mineralischen Verbundstoffes nach mindestens einem der Ansprüche 1 bis 15, zur Herstellung von Wärmedämmformteilen und - platten, Schalldämmformteilen und -platten, Feuerwiderstandsformteilen und -platten, Brandschutzformteilen und -platten Vakuumisolationsformteilen und -platten, Bauschäumen- und Klebern, Deckenplatten, Wandplatten, Bodenplatten und Sandwich-Elementen.
